# EUROPÄISCHE PATENTSCHRIFT

(11) **EP 4 025 805 B1**
(45) Veröffentlichungstag und Bekanntmachung des Hinweises auf die Patenterteilung: **11.10.2023**
(21) Anmeldenummer: 20774870.8
(22) Anmeldetag: 13.08.2020
(51) Int. Cl.: F16F 15/134, F16F 15/14, F16F 15/123

(54) **DREHSCHWINGUNGSDÄMPFER MIT FLIEHKRAFTPENDEL UND VORDÄMPFER**
TORSIONAL VIBRATION DAMPER HAVING A CENTRIFUGAL PENDULUM ABSORBER AND PRE-DAMPER
AMORTISSEUR DE VIBRATIONS DE TORSION COMPRENANT UN PENDULE CENTRIFUGE ET UN PRÉAMORTISSEUR

(30) Priorität: 02.09.2019 DE 102019123427
(43) Veröffentlichungstag der Anmeldung: 13.07.2022
(73) Patentinhaber: Schaeffler Technologies AG & Co. KG, 91074 Herzogenaurach (DE)
(72) Erfinder: STRASSER, Pascal, 67250 Aschbach (FR); BAHRMANN, Christian, 77830 Bühlertal (DE)
(86) Internationale Anmeldenummer: PCT/DE2020/100700
(87) Internationale Veröffentlichungsnummer: WO 2021/043363

(56) Entgegenhaltungen:
- WO-A1-2018/210378
- DE-A1-102014 219 271
- DE-A1-102017 109 439

## Beschreibung

Die Erfindung betrifft einen als Zweimassenschwungrad aufgebauten Drehschwingungsdämpfer, der in einem Antriebsstrang eines von einer Brennkraftmaschine angetriebenen Kraftfahrzeugs eingesetzt ist, umfassend ein Primärteil und ein Sekundärteil, die um eine Drehachse drehbar und relativ zueinander verdrehbar sind und die über eine Bogenfedern einschließende Dämpfungseinrichtung verbunden sind, wobei die Bogenfedern mit einem Ende an Anschlägen des Primärteils und mit einem weiteren Ende an Flanschflügeln eines dem Sekundärteil zugeordneten Trägerflansches abgestützt sind, an dem weiterhin beidseitig beweglich angeordnete Pendelmassen eines Fliehkraftpendels befestigt sind.

Es ist bekannt, als Zweimassenschwungrad aufgebaute Drehschwingungsdämpfer zur Dämpfung von Drehschwingungen in Antriebssträngen von brennkraftmaschinengetriebenen Kraftfahrzeugen einzusetzen. Auslöser von Drehschwingungen ist die periodische Taktung der Hubkolbenbrennkraftmaschine, die in Kombination mit der Zylinderzündfolge zu einer Drehungleichförmigkeit der Kurbelwelle führt. Aufgrund der Verbrennungsvorgänge der Brennkraftmaschine stellt sich eine Drehungleichförmigkeit ein, die auf den Antriebsstrang des Fahrzeugs übertragen Komforteinbußen verursacht. Eine Dämpfung der von der Brennkraftmaschine ausgehenden Schwingungen verbessert den Fahrkomfort.

In der DE 10 2014 211 603 A1 ist ein als Zweimassenschwungrad aufgebauter Drehschwingungsdämpfer gezeigt, der ein Primärteil und ein Sekundärteil umfasst, die über eine Federdämpfungseinrichtung, auch Bogenfederanordnung genannt, verbunden und relativ zueinander verdrehbar sind. Das mehrteilige Sekundärteil schließt einen mit der Federdämpferanordnung zusammenwirkenden Trägerflansch sowie einen auch Abtriebsnabe genannten Abtriebsflansch ein. Weiterhin umfasst das Zweimassenschwungrad ein mit dem Sekundärteil verbundenes Fliehkraftpendel, wobei beidseitig von dem Trägerflansch Pendelmassen beweglich angeordnet sind.

Dokument WO 2018/210378 A1, welches als der nächstliegende Stand der Technik angesehen wird, offenbart die Merkmale des Oberbegriffs des Anspruchs 1.

Der Erfindung liegt die Aufgabe zugrunde, einen funktional verbesserten erhöhte, Isolationsanforderungen erfüllenden Drehschwingungsdämpfer mit Fliehkraftpendel bereitzustellen, der geräuschgedämpft, vor Überlast geschützt sowie einfach aufgebaut und kostengünstig herstellbar ist.

Die zuvor genannte Aufgabe wird erfindungsgemäß durch einen die Merkmale des Anspruchs 1 einschließenden Drehschwingungsdämpfer gelöst. Bevorzugte Ausgestaltungen der Erfindung sind in den Unteransprüchen und der nachfolgenden Beschreibung angegeben.

Erfindungsgemäß ist vorgesehen, an dem Drehschwingungsdämpfer umfangsseitig beabstandet zu den Pendelmassen positionierte, mit dem Trägerflansch verbundene, reibungsfreie Vordämpfer vorzusehen.

Der in dem bevorzugt als HK-Dämpfer ausgeführten Drehschwingungsdämpfer ergänzend zu dem Fliehkraftpendel integrierte Vordämpfer bietet einen wichtigen Baustein zum Schutz des Fliehkraftpendels vor einer Überlast. Weiterhin unterbindet der integrierte, weitestgehend reibungsfreie, zumindest reibungsarme Vordämpfer wirksam eine Geräuschentwicklung des Fliehkraftpendels.

Das erfindungsgemäße Konzept verhindert damit beispielsweise wirksam ein Verzahnungsklappern und oder bei einer Hybridanwendung des Drehschwingungsdämpfers ein Leerlaufrasseln beim Laden der Batterie während eines Anstiegs oder Abfalls des Drehmomentes der Brennkraftmaschine.

Dabei ist der Vordämpfer zur Erzielung einer verbesserten, optimierten Isolation so konstruiert, dass dieser unabhängig von der Grundreibung des Dämpfers eine Kennlinie mit einer möglichst flachen Steigung aufweist. Gleichzeitig erfüllt die Erfindung geforderte Isolationstargets und bietet einen wirksamen Schutz gegen Übermomente.

Dabei ist der Vordämpfer zur Erzielung einer verbesserten, optimierten Isolation so konstruiert, dass dieser unabhängig von der Grundreibung des Dämpfers eine Kennlinie mit einer möglichst flachen Steigung aufweist. Gleichzeitig stellt sich durch die Erfindung ein optimierter, höherer Isolationsgrad ein, der steigende Isolationsanforderungen bzw. geforderte Isolationstargets hinsichtlich NVH (Noise, Vibration, Harshness) für Drehschwingungsdämpfer allgemein und speziell für Hybrid-Anwendungen erfüllt. Damit verbunden reduzieren sich die hör- oder spürbaren Schwingungen in Kraftfahrzeugen, wodurch sich der Komfort entscheidend verbessert. Der einfach aufgebaute, kostengünstig realisierbare Vordämpfer ist vorteilhaft geschützt und bauraumoptimiert innerhalb des vorhandenen Bauraums von dem Drehschwingungsdämpfer integriert.

Ein bevorzugter konstruktiver Aufbau sieht vor, dass der Vordämpfer einen zwischen zwei beabstandeten Seitenscheiben geführten Trägerflansch einschließt, der über umfangsverteilt angeordnete Druckfedern kraftschlüssig mit seitlich dem Trägerflansch zugeordneten Seitenscheiben verbunden ist. Die vorzugsweise als Schraubendruckfedern ausgeführten Druckfedern sind dabei in Federfenstern der Seitenscheiben und des Trägerflansches eingesetzt und abgestützt. Der Durchmesser der Druckfedern übertrifft dabei die Breite der zusammengefügten Bauteile Trägerflansch und Seitenscheiben. Die Federfenster sind in dem scheibenartig gestalteten Trägerflansch jeweils so angeordnet, dass sich im Bereich der Federfenster radial innenseitig ein relativ breiter Kraftrand einstellt. Weiterhin ist vorgesehen, dass jeder Seitenscheibe des Vordämpfers ein Reibring zugeordnet ist. Ein erster Reibring ist dabei unmittelbar an dem Primärteil und ein weiterer Reibring mittelbar über eine zugehörige Tellerfeder an einem Primärteildeckel axial vorgespannt positioniert und gleichzeitig radial geführt. Aufgrund dieser Reibringanordnung ist der auch Fettraum genannte, zur Aufnahme der Bogenfedern bestimmte Bauraum der Dämpfungseinrichtung abgedichtet.

In dem auch Normallastbetrieb genannten Betriebszustand des Drehschwingungsdämpfers verdrehen sich das Primärteil und das Sekundärteil relativ zueinander entgegen der Wirkung von den Bogenfedern der Dämpfungseinrichtung um die Drehachse des Drehschwingungsdämpfers. Dagegen ist bei geringen Lasten der Vordämpfer wirksam, dessen Druckfederkennlinie klein bzw. flach ausgelegt ist gegenüber der Kennlinie von den Bogenfedern der Dämpfungseinrichtung. Folglich werden bei geringen bzw. kleinen anliegenden Drehmomenten die Bogenfedern nicht komprimiert, während sich zwischen dem Trägerflansch und den Seitenscheiben die Wirkung des Vordämpfers entfaltet.

Die beidseitig an dem Trägerflansch geführten Seitenscheiben des Vordämpfers sind über Stufenbolzen axial beabstandet verbunden. Die bevorzugt vernieteten Stufenbolzen greifen ebenfalls spielbehaftet in bogenförmige Aussparungen des Trägerflansches ein, wodurch die Seitenscheiben gleichzeitig gegenüber dem Trägerflansch radial geführt sind.

Gemäß einer bevorzugten Ausgestaltung der Erfindung ist vorgesehen, die Druckfedern des Vordämpfers übereinstimmend mit den Flügelflanschen in dem Trägerflansch zu positionieren. Dadurch stellt sich eine um 180° zueinander versetzte Einbaulage der Druckfedern ein.

Weiterhin ermöglicht die Erfindung eine unterschiedliche Gestaltung der für den Vordämpfer bestimmten Seitenscheiben. Gemäß einer ersten Variante weisen die Seitenscheiben jeweils zwei radial nach innen ausgerichtete Ausnehmungen auf. Diese Ausnehmungen erstecken sich über eine Länge, die eine ungehinderte Bewegung der an dem Trägerflansch angeordneten Pendelmassen im Betriebszustand des Drehschwingungsdämpfers zulässt. Bei dieser Gestaltung der Seitenscheiben verbindet ein relativ schmaler Steg die Zonen der Seitenscheiben, in denen die Federfenstern eingebracht sind, wobei jeder Steg gleichzeitig eine Pendelmasse außenseitig radial beabstandet umschließt. Alternativ dazu bietet es sich an, Seitenscheiben mit jeweils zwei radial nach außen gerichteten Ausnehmungen zu versehen, so dass die Pendelmassen radial nach außen versetzt zu Seitenscheibenstegen positioniert sind.

Als Seitenscheiben können dem Vordämpfer außerdem Scheibensegmente zugeordnet werden, wobei jeweils zwei Scheibensegmente an jeder Seite dem Trägerflansch beabstandet zwischen den Pendelmassen positioniert sind. Die durch Stufenbolzen verbundenen, umfangsseitig längenbegrenzten Scheibensegmente sind lokal im Bereich der Federfenstern bzw. der Flanschflügel von dem Trägerflansch angeordnet.

Der erfindungsgemäße Drehschwingungsdämpfer mit Fliehkraftpendel und integriertem Vordämpfer eignet sich für Hybridanwendungen und ist vorzugsweise als DK-Hybriddämpfer ausgelegt. Dabei ist der verfügbare Bauraum bzw. sind die Einbauverhältnisse für den Kraftfahrzeugantrieb durch Umgebungsbauteile wie beispielsweise Elektromotor und Doppelkupplung beeinflusst. Weiterhin eignet sich der erfindungsgemäße Drehschwingungsdämpfer für PKW-Antriebsstränge mit besonderen Anforderungen hinsichtlich einer Leerlaufisolation sowie für serielle, seriell-parallele und/oder leistungsverzweigte Hybridanwendungen.

Nachfolgend wird die Erfindung anhand von in sechs Figuren gezeigten Ausführungsbeispielen näher beschrieben. Die Erfindung ist jedoch nicht auf die in den Figuren gezeigten Ausführungsbeispiele beschränkt. Es zeigt:
- Fig. 1:: in einem Teilschnitt einen erfindungsgemäß aufgebauten Drehschwingungsdämpfer in einer Perspektive;
- Fig. 2:: einen Ausschnitt des Drehschwingungsdämpfers gemäß Fig. 1 mit weiteren Details des Vordämpfers;
- Fig. 3:: das Fliehkraftpendel des Drehschwingungsdämpfers sowie den Vordämpfer in einer ersten Variante;
- Fig. 4:: das Fliehkraftpendel des Drehschwingungsdämpfers sowie eine zweite Variante des Vordämpfers;
- Fig. 5:: das Fliehkraftpendel des Drehschwingungsdämpfers sowie eine dritte Variante des Vordämpfers;
- Fig. 6:: in einer Einzelteilzeichnung den Trägerflansch des Drehschwingungsdämpfers.

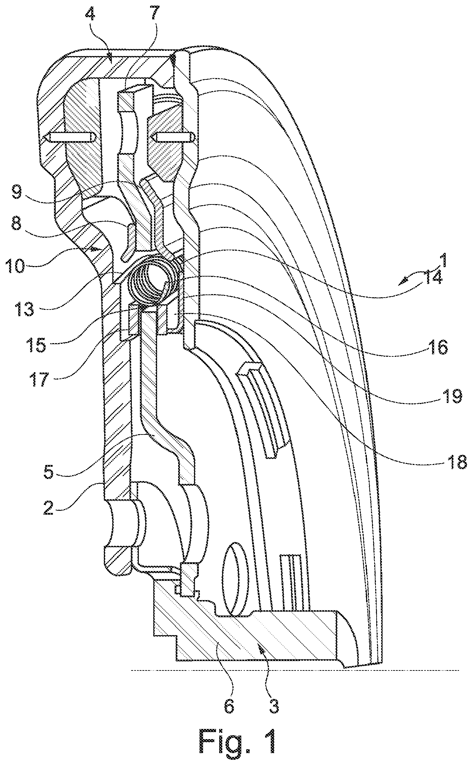

Die Fig. 1 zeigt einen Teilschnitt von einem erfindungsgemäß als Zweimassenschwungrad aufgebauten Drehschwingungsdämpfer 1, der beispielsweise in einem für eine Hybridanwendung bestimmten Antriebsstrang (nicht gezeigt) eines Kraftfahrzeugs einsetzbar ist. In dem Drehschwingungsdämpfer 1 ist ein Vordämpfer sowie ein Fliehkraftpendel integriert. Der Drehschwingungsdämpfer 1 ist antriebsseitig ist mit einer Brennkraftmaschine und abtriebsseitig mit einer Welle oder einer Kupplung verbunden. Der auch Torsionsdämpfer genannte Drehschwingungsdämpfer 1 umfasst auf der zur Brennkraftmaschine gerichteten Seite ein auch Eingangsteil genanntes Primärteil 2 und abtriebsseitig ein auch Ausgangsteil genanntes Sekundärteil 3, die um eine Drehachse gemeinsam drehbar und relativ zueinander begrenzt verdrehbar sind. Dabei sind das Primärteil 2 und das Sekundärteil 3 über eine Bogenfedern (nicht gezeigt) einschließende Dämpfungseinrichtung 4 bekannten Aufbaus und bekannter Wirkungsweise verbunden. Die Bogenfedern sind einerseits an Anschlägen (nicht gezeigt) des Primärteils 2 und andererseits an Flanschflügeln 7 von einem Trägerflansch 5 des mehrteiligen Sekundärteils 3 abgestützt. Das Sekundärteil 3 schließt zentrisch weiterhin eine beispielsweise mit einer Abtriebswelle verbundene Abtriebsnabe 6 ein, die an dem Trägerflansch 5 drehfixiert befestigt ist.

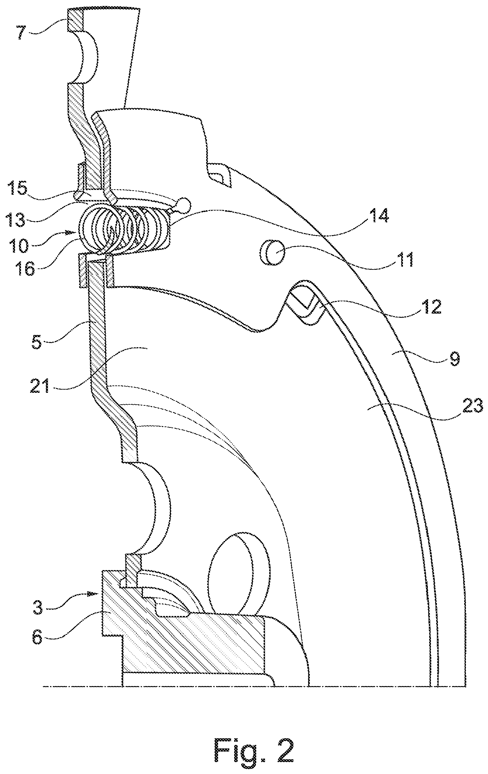

Radial unterhalb der Dämpfungseinrichtung 4 ist innerhalb des Drehschwingungsdämpfers 1 ein mit dem Trägerflansch 5 verbundener Vordämpfer 10 integriert, der u. a. beidseitig von dem Trägerflansch 5 geführte Seitenscheiben 8, 9 umfasst, die über Stufenbolzen 11 (gezeigt in Fig. 2) miteinander verbunden sind, welche in bogenförmige Aussparungen 12 (gezeigt in Fig. 2) des Trägerflansches 5 eingepasst sind und damit eine radiale Führung der Seitenscheiben 8, 9 bewirken. Weiterhin umfasst der Vordämpfer 10 umfangsverteilt in Federfenster 13, 14 der Seitenscheiben 8, 9 und Federfenster 15 des Trägerflansches 5 aufgenommene, als Schraubendruckfedern ausgeführte Druckfedern 16, die im Betriebszustand von dem Trägerflansch 5 in Umfangsrichtung beaufschlagt werden. Jeder Seitenscheibe 8, 9 ist axial außenseitig ein Reibring 17, 18 zugeordnet, wobei mittels einer Tellerfeder 19 der Reibring 17 und folglich der Trägerflansch 5 axial vorgespannt positioniert ist. Der Reibring 17 ist unmittelbar an dem Primärteil 2 und der Reibring 18 mittelbar über die Tellerfeder 19 an einem Primärteildeckel 20 abgestützt, so dass sich über die Reibringe 17, 18 eine Grundreibung zwischen dem Primärteil 2 und dem Sekundärteil 3 einstellt. Einen Arbeitsbereich des Vordämpfers 10 kann ein Freiwinkel (nicht gezeigt) definieren, der mit dem Trägerflansch 5 in die für die Druckfedern 16 bestimmten Federfenstern 13, 14 eingreift.

Im Betriebszustand des Drehschwingungsdämpfers 1 verdrehen sich das Primärteil 2 und das Sekundärteil 3 entgegen der Wirkung von den Bogenfedern der Dämpfungseinrichtung 4 um die Drehachse des Drehschwingungsdämpfers 1, dagegen ist bei geringen Lasten der Vordämpfer 10 wirksam. Die Kennlinie der Druckfedern 16 ist klein bzw. flach gegenüber der Bogenfederkennlinie der Dämpfungseinrichtung 4, so dass bei anliegenden kleinen Drehmomenten die Bogenfedern nicht komprimiert werden, dagegen entfaltet sich zwischen dem Trägerflansch 5 und den Seitenscheiben 8, 9 die Wirkung des Vordämpfers 10. Hierbei tritt lediglich eine Relativverlagerung zwischen den Seitenscheiben 8, 9 und dem Trägerflansch 5 auf, so dass aufgrund der Wirkung des Vordämpfers 10 eine Grundreibung zwischen dem Primärteil 2 und dem Sekundärteil 3 unwirksam ist.

In den Fig. 2 bis Fig. 5 sind Details des Drehschwingungsdämpfers 1 gezeigt, die unterschiedlich aufgebaute Vordämpfer 10 in Kombination mit einem Fliehkraftpendel 25 zeigen.

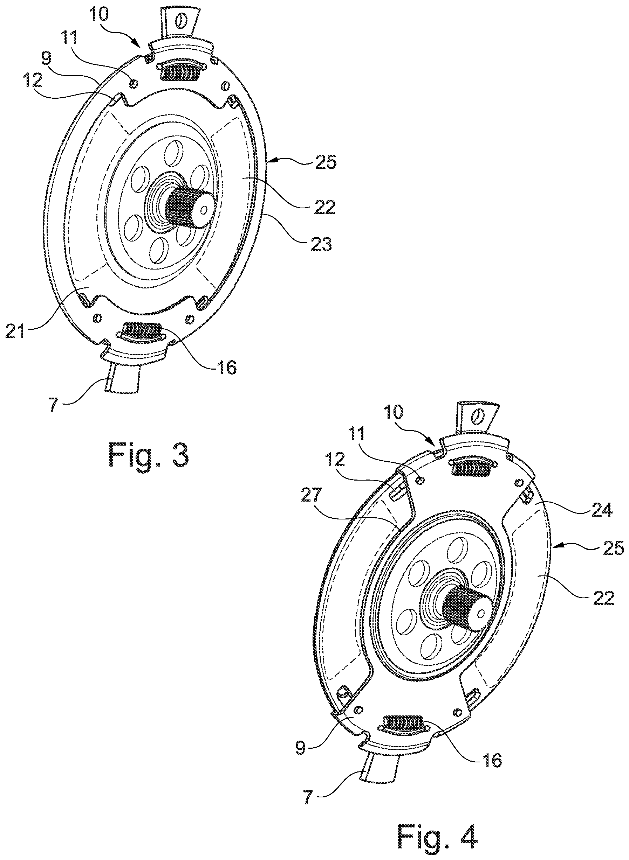

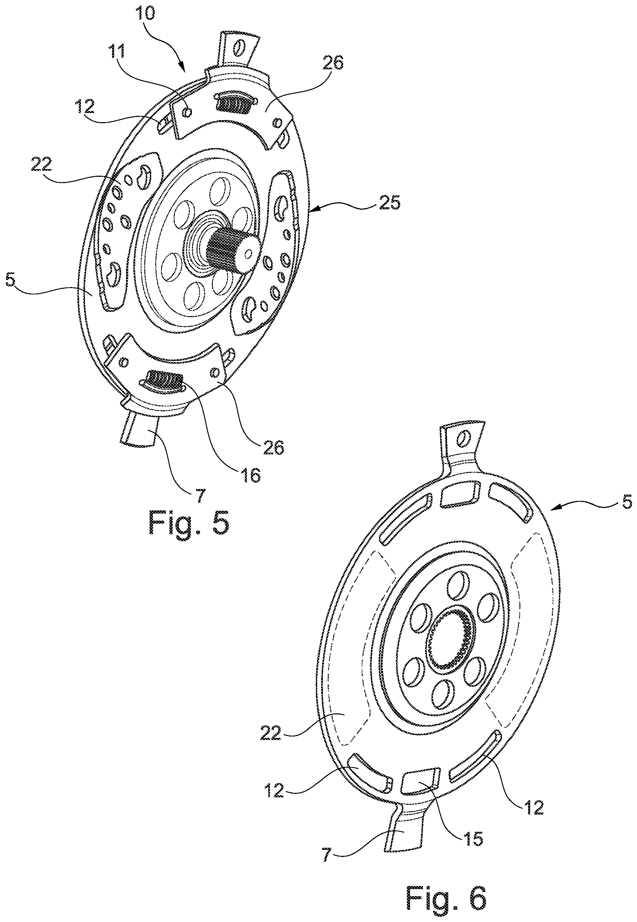

Gemäß Fig. 2 und Fig. 3 weist die Seitenscheibe 9 zwei radial nach innen ausgerichtete Ausnehmungen 21 auf, die zur Aufnahme von Pendelmassen 22 (gezeigt in Fig. 3) eines Fliehkraftpendels 25 bestimmt sind. Die zugehörige weitere Seitenscheibe 8 des Vordämpfers ist übereinstimmend gestaltet. Im Bereich der Ausnehmungen 21 bilden die Seitenscheiben 9 relativ schmale Stege 23, welche die jeweilige Pendelmasse 22 außenseitig radial beabstandet umschließt. In der Fig. 4 ist die Seitenscheibe 9 mit zwei radial nach außen ausgerichteten Ausnehmungen 24 abgebildet, so dass sich ein Steg 27 einstellt. Gemäß der Fig. 5 werden die Seitenscheiben durch Scheibensegmente 26 gebildet, welche lokal an dem Trägerflansch 5 im Bereich der Flanschflügel 7 zwischen den Pendelmassen 22 positioniert sind.

In der Fig. 6 ist der Trägerflansch 5 in einer Einzelteilzeichnung gezeigt, der übereinstimmend mit der Lage der Flanschflügel 7 jeweils ein Federfenster 15 für die Druckfeder 16 aufweist, dem beidseitig eine bogenförmig verlaufende Aussparung 12 für die Stufenbolzen 11 der Seitenscheiben 8, 9 zugeordnet ist.

### Bezugszeichenliste

- 1: Drehschwingungsdämpfer
- 2: Primärteil
- 3: Sekundärteil
- 4: Dämpfungseinrichtung
- 5: Trägerflansch
- 6: Abtriebsnabe
- 7: Flanschflügel
- 8: Seitenscheibe
- 9: Seitenscheibe
- 10: Vordämpfer
- 11: Stufenbolzen
- 12: Aussparung
- 13: Federfenster (Seitenscheibe)
- 14: Federfenster (Seitenscheibe)
- 15: Federfenster (Trägerflansch)
- 16: Druckfeder
- 17: Reibring
- 18: Reibring
- 19: Tellerfeder
- 20: Primärteildeckel
- 21: Ausnehmung
- 22: Pendelmasse
- 23: Steg
- 24: Ausnehmung
- 25: Fliehkraftpendel
- 26: Scheibensegment
- 27: Steg

## Patentansprüche

1. Drehschwingungsdämpfer (1), ausgeführt als ein Zweimassenschwungrad mit einem Primärteil (2) und einem Sekundärteil (3), die um eine Drehachse drehbar und relativ zueinander verdrehbar sind und die über eine Bogenfedern einschließende Dämpfungseinrichtung (4) verbunden sind, wobei die Bogenfedern mit einem Ende an Anschlägen des Primärteils (2) und mit einem weiteren Ende an Flanschflügeln (7) eines dem Sekundärteil (3) zugeordneten Trägerflansches (5) abgestützt sind, an dem beidseitig beweglich angeordnete Pendelmassen (22) eines Fliehkraftpendels (25) befestigt sind, **dadurch gekennzeichnet, dass** der Drehschwingungsdämpfer (1) umfangsseitig beabstandet zu den Pendelmassen (22) einen mit dem Trägerflansch (5) verbundenen Vordämpfer (10) einschließt.

2. Drehschwingungsdämpfer nach Anspruch 1, **dadurch gekennzeichnet, dass** der Vordämpfer (10) zwei an dem Trägerflansch (5) geführte Seitenscheiben (8, 9) umfasst, wobei über Druckfedern (16) die Seitenscheiben (8, 9) mit dem Trägerflansch (5) kraftschlüssig verbunden sind.

3. Drehschwingungsdämpfer nach einem der vorhergehenden Ansprüche, **dadurch gekennzeichnet, dass** die Druckfedern (16) in korrespondierend angeordnete Federfenster (13, 14) der Seitenscheiben (8, 9) und Federfenster (15) des Trägerflansches (5) eingesetzt sind.

4. Drehschwingungsdämpfer nach einem der vorhergehenden Ansprüche, **dadurch gekennzeichnet, dass** jeder Seitenscheibe (8, 9) ein Reibring (17, 18) zugeordnet ist, wobei der Reibring (17) unmittelbar an dem Primärteil (2) und der Reibring (18) über eine Tellerfeder (19) mittelbar an einem Primärteildeckel (20) abgestützt ist.

5. Drehschwingungsdämpfer nach einem der vorhergehenden Ansprüche, **dadurch gekennzeichnet, dass** die Seitenscheiben (8, 9) über Stufenbolzen (11) verbunden sind, die spielbehaftet in bogenförmige Aussparungen (12) des Trägerflansches (5) eingreifen.

6. Drehschwingungsdämpfer nach einem der vorhergehenden Ansprüche, **dadurch gekennzeichnet, dass** die Druckfedern (16) des Vordämpfers (10) übereinstimmend mit den Flügelflanschen (7) um 180° zueinander versetzt in dem Trägerflansches (5) positioniert sind.

7. Drehschwingungsdämpfer nach einem der vorhergehenden Ansprüche, **dadurch gekennzeichnet, dass** die Seitenscheiben (8, 9) zur Aufnahme der an dem Trägerflansch (5) beweglich angeordneten Pendelmassen (22) jeweils zwei radial nach innen ausgerichtete Ausnehmungen (21) aufweisen.

8. Drehschwingungsdämpfer nach einem der vorhergehenden Ansprüche, **dadurch gekennzeichnet, dass** die Seitenscheiben (8, 9) zur Aufnahme der an dem Trägerflansch (5) beweglich angeordneten Pendelmassen (22) jeweils zwei radial nach außen ausgerichtete Ausnehmungen (24) aufweisen.

9. Drehschwingungsdämpfer nach einem der vorhergehenden Ansprüche, **dadurch gekennzeichnet, dass** als Seitenscheiben dem Trägerflansch (5) auf jeder Seite zwei Scheibensegmente (26) vorgesehen sind, die längenbegrenzt umfangsseitig beabstandet zwischen den Pendelmassen (22) positioniert sind.

10. Drehschwingungsdämpfer nach einem der vorhergehenden Ansprüche, **dadurch gekennzeichnet, dass** der Drehschwingungsdämpfer (2) mit integriertem Fliehkraftpendel (25) und Vordämpfer (10) für Hybridanwendungen vorgesehen ist..

## Claims

1. A torsional vibration damper (1) in the form of a dual-mass flywheel having a primary part (2) and a secondary part (3) which are rotatable about a rotational axis and rotatable relative to one another and which are connected via a damping device (4) that includes bow springs, wherein the bow springs are supported with one end on stops of the primary part (2) and with a further end on flange wings (7) of a support flange (5) associated with the secondary part (3), to which support flange pendulum masses (22) of a centrifugal pendulum absorber (25) are fastened and are arranged so as to be movable on either side, **characterised in that** the torsional vibration damper (1) includes, in a manner circumferentially spaced apart from the pendulum masses (22), a pre-damper (10) connected to the support flange (5).

2. The torsional vibration damper according to claim 1, **characterised in that** the pre-damper (10) comprises two side discs (8, 9) guided on the support flange (5), wherein the side discs (8, 9) are connected to the support flange (5) in a force-fitting manner via compression springs (16).

3. The torsional vibration damper according to any one of the preceding claims, **characterised in that** the compression springs (16) are inserted into correspondingly arranged spring windows (13, 14) of the side discs (8, 9) and spring window (15) of the support flange (5).

4. The torsional vibration damper according to any one of the preceding claims, **characterised in that** each side disc (8, 9) is assigned a friction ring (17, 18), wherein the friction ring (17) is directly supported on the primary part (2) and the friction ring (18) is indirectly supported on a primary part cover (20) via a disc spring (19).

5. The torsional vibration damper according to any one of the preceding claims, **characterised in that** the side discs (8, 9) are connected via stepped bolts (11), which engage with play in arcuate cutouts (12) of the support flange (5).

6. The torsional vibration damper according to any one of the preceding claims, **characterised in that** the compression springs (16) of the pre-damper (10) are positioned in the support flange (5) in correspondence with the flange wings (7) offset by 180° to each other.

7. The torsional vibration damper according to any one of the preceding claims, **characterised in that** the side discs (8, 9) each have two radially inwardly aligned recesses (21) for receiving the pendulum masses (22) movably arranged on the support flange (5).

8. The torsional vibration damper according to any one of the preceding claims, **characterised in that** the side discs (8, 9) each have two radially outwardly aligned recesses (24) for receiving the pendulum masses (22) movably arranged on the support flange (5).

9. The torsional vibration damper according to any one of the preceding claims, **characterised in that** two disc segments (26) are provided as side discs on each side of the support flange (5), which are positioned circumferentially spaced apart between the pendulum masses (22) within a limited length.

10. The torsional vibration damper according to any one of the preceding claims, **characterised in that** the torsional vibration damper (2) is provided with an integrated centrifugal pendulum absorber (25) and pre-damper (10) for Flybrid applications.

## Revendications

1. Amortisseur de vibrations de torsion (1), conçu comme un volant bimasse avec une partie primaire (2) et une partie secondaire (3), qui peuvent être tournées autour d'un axe de rotation et tournées l'une par rapport à l'autre et qui sont reliées par un dispositif d'amortissement (4) comprenant des ressorts en arc, les ressorts en arc venant en appui avec une extrémité sur des butées de la partie primaire (2) et avec une autre extrémité sur des ailettes de bride (7) d'une bride de support (5) associée à la partie secondaire (3), sur laquelle sont fixées des masses pendulaires (22) d'un pendule centrifuge (25) agencées de manière mobile des deux côtés, **caractérisé en ce que** l'amortisseur de vibrations de torsion (1) comprend un préamortisseur (10) relié à la bride de support (5), à une distance circonférentielle des masses pendulaires (22).

2. Amortisseur de vibrations de torsion selon la revendication 1, **caractérisé en ce que** le préamortisseur (10) comprend deux disques latéraux (8, 9) guidés sur la bride de support (5), les disques latéraux (8, 9) étant reliés, par adhérence, à la bride de support (5) par le biais de ressorts de compression (16).

3. Amortisseur de vibrations de torsion selon l'une quelconque des revendications précédentes, **caractérisé en ce que** les ressorts de compression (16) sont insérés dans des fenêtres de ressort (13, 14) des disques latéraux (8, 9) et des fenêtres de ressort (15) de la bride de support (5) agencées de manière correspondante.

4. Amortisseur de vibrations de torsion selon l'une quelconque des revendications précédentes, **caractérisé en ce qu'**une bague de friction (17, 18) est associée à chaque disque latéral (8, 9), la bague de friction (17) venant directement en appui sur la partie primaire (2) et la bague de friction (18) venant indirectement en appui sur un couvercle de partie primaire (20) par l'intermédiaire d'une rondelle-ressort (19).

5. Amortisseur de vibrations de torsion selon l'une quelconque des revendications précédentes, **caractérisé en ce que** les disques latéraux (8, 9) sont reliés par l'intermédiaire de boulons étagés (11) qui viennent en prise avec du jeu dans des évidements (12) en forme d'arc de la bride de support (5).

6. Amortisseur de vibrations de torsion selon l'une quelconque des revendications précédentes, **caractérisé en ce que** les ressorts de compression (16) du préamortisseur (10) sont positionnés de façon à coïncider avec les brides à ailettes (7) décalés de 180° les uns par rapport aux autres dans la bride de support (5).

7. Amortisseur de vibrations de torsion selon l'une quelconque des revendications précédentes, **caractérisé en ce que** les disques latéraux (8, 9) présentent respectivement deux évidements (21) orientés radialement vers l'intérieur pour recevoir les masses pendulaires (22) agencées de manière mobile sur la bride de support (5).

8. Amortisseur de vibrations de torsion selon l'une quelconque des revendications précédentes, **caractérisé en ce que** les disques latéraux (8, 9) présentent respectivement deux évidements (24) orientés radialement vers l'extérieur pour recevoir les masses pendulaires (22) agencées de manière mobile sur la bride de support (5).

9. Amortisseur de vibrations de torsion selon l'une quelconque des revendications précédentes, **caractérisé en ce que** deux segments de disque (26) sont prévus de chaque côté de la bride de support (5) en tant que disques latéraux, lesquels sont positionnés à une distance circonférentielle limitée en longueur entre les masses pendulaires (22).

10. Amortisseur de vibrations de torsion selon l'une quelconque des revendications précédentes, **caractérisé en ce que** l'amortisseur de vibrations de torsion (2) est muni d'un pendule centrifuge (25) intégré et d'un préamortisseur (10) pour applications hybrides.
